# EUROPEAN PATENT APPLICATION

(11) **EP 4 783 539 A1**
(43) Date of publication of application: **29.07.2026**
(21) Application number: 26153980.3
(22) Date of filing: 26.01.2026
(51) Int. Cl.: H04L 45/12, H04L 45/125, H04L 45/00, H04L 45/243, H04L 47/125

(54) **GLOBAL BANDWIDTH-AWARE ADAPTIVE ROUTING**

(30) Priority: 27.01.2025 US 202519038358
(71) Applicant: Mellanox Technologies, Ltd., 2069200 Yokneam (IL)
(72) Inventor: KOK, Wilson, 2069200 Yokneam (IL); TANTSURA, Evgeny, 2069200 Yokneam (IL); JAGADEESAN, Suresh Kumar, 2069200 Yokneam (IL); GAFNI, Barak, 2069200 Yokneam (IL)
(74) Representative: Mathys & Squire

(57) **Abstract**

Systems and methods are described for global bandwidth-aware adaptive routing in a network communication. Systems include circuits to reduce a number of active next-hops between the system and a device of a plurality of devices based at least in part on a total number of next-hops between the system and the device and a total number of active next-hops between the system and the plurality of devices.

## Description

### FIELD OF THE DISCLOSURE

The present disclosure is generally directed toward network communications and, in particular, toward global bandwidth-aware adaptive routing in network communications.

### BACKGROUND

Communication protocols may be provided for certain network communications, such as Ethernet, to enable standards for communication. In an example, such network communications can support artificial intelligence (AI) training workloads that require large east-west network bandwidth. Adaptive routing may be provided in the network communications to maximize network utilization by load balancing traffic based on local switch states such as queue length and port utilization. Further, AI training may include performance that is highly sensitive to changes in network conditions (including, to congestion, latency, drops). A failed link in the network may cause a reduction in bandwidth and potentially congestion, especially as AI related aspects in the network communications may operates at high utilization. Adaptive routing allows rebalancing decisions that may be based on local states and that may not enable upstream switches or routers to shift traffic away from downstream devices that are subject to events causing reduced bandwidth capacity, such as in cases of failed or congested links.

### SUMMARY

The invention is defined by the claims. In order to illustrate the invention, aspects and embodiments which may or may not fall within the scope of the claims are described herein.

Systems and methods are described for global bandwidth-aware adaptive routing in a network communication. Systems include circuits to reduce a number of active next-hops between the system and a device of a plurality of devices based at least in part on a total number of next-hops between the system and the device and a total number of active next-hops between the system and the plurality of devices.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE SEVERAL VIEWS OF THE DRAWINGS

The present disclosure is described in conjunction with the appended figures, which are not necessarily drawn to scale:
Fig. 1 illustrates a system that is subject to embodiments for global bandwidth-aware adaptive routing in Ethernet communications;
Fig. 2 illustrates aspects of a system for global bandwidth-aware adaptive routing in Ethernet communications, according to at least one embodiment;
Fig. 3 illustrates a topology associated with a system for global bandwidth-aware adaptive routing in Ethernet communications, according to at least one embodiment; and
Fig. 4 illustrates a process flow in a system for global bandwidth-aware adaptive routing in Ethernet communications, according to at least one embodiment.
Fig. 5 illustrates computer and processor aspects of a system for global bandwidth-aware adaptive routing in Ethernet communications, according to at least one embodiment.

### DETAILED DESCRIPTION

The ensuing description provides embodiments only, and is not intended to limit the scope, applicability, or configuration of the claims. Rather, the ensuing description will provide those skilled in the art with an enabling description for implementing the described embodiments. It is understood that various changes may be made in the function and arrangement of elements without departing from the spirit and scope of the appended claims.

It will be appreciated from the following description, and for reasons of computational efficiency, that the components of the system can be arranged at any appropriate location within a distributed network of components without impacting the operation of the system.

Furthermore, it should be appreciated that the various links connecting the elements can be wired, traces, or wireless links, or any appropriate combination thereof, or any other appropriate known or later developed element(s) that is capable of supplying and/or communicating data to and from the connected elements. Transmission media used as links, for example, can be any appropriate carrier for electrical signals, including coaxial cables, copper wire and fiber optics, electrical traces on a printed circuit board (PCB), or the like.

As used herein, the phrases "at least one," "one or more," "or," and "and/or" are openended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "automatic" and variations thereof, as used herein, refers to any appropriate process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

The terms "determine," "calculate," "compute," and variations thereof, as used herein, are used interchangeably, and include any appropriate type of methodology, process, operation, or technique.

Various aspects of the present disclosure will be described herein with reference to drawings that are schematic illustrations of idealized configurations.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and this disclosure.

As used herein, the singular forms "a," "an," and "the" are intended to include the plural forms as well, unless the context clearly indicates otherwise. It will be further understood that the terms "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. The term "and/or" includes any and all combinations of one or more of the associated listed items.

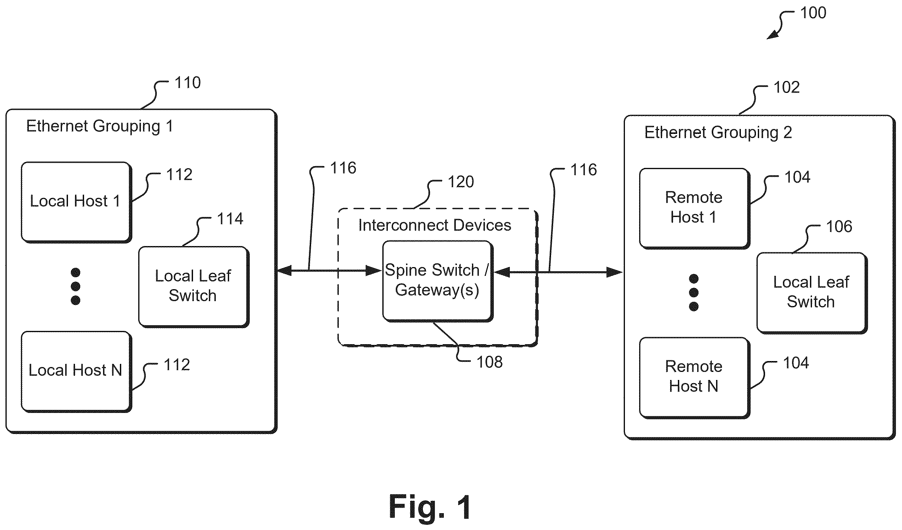

Fig. 1 illustrates a system 100 which may be subject to embodiments for global bandwidth-aware adaptive routing in Ethernet communications, as detailed herein. The system 100 and a method for such a system 100 enables adaptive routing to rebalance transmission load distribution based on relative downstream capacity across multiple paths, indicated by events as they occur. This can result in optimal adjustments and reduced reliance on fabric-based flow control or endpoint-based congestion control. This ultimately minimizes performance impact with link failures in the fabric. For example, in a lossless fabric, congestion can trigger coarse grain flow control mechanisms such as, Per Priority Flow Control (PFC) which may cause head-of-line blocking or may cause a network spread across multiple hops. This can penalize unrelated traffic flows and can lead to significant performance degradation.

Further, endpoint-based congestion control provides mitigation by reducing the transmission rate to avoid congestion all together. The system 100 includes at least one circuit that may be an execution unit of a processor within a leaf switch 106; 114. The leaf switch 106; 114 may be associated with a respective one rack or other Ethernet grouping 2 102; 1 110 of hosts or other endpoints 1-N 104; 1-N 112, as illustrated. Further, the system 100 includes at least a spine switch or gateway 108, as part of one or more interconnect devices 120, to provide Ethernet communications 116 between multiple leaf switches 106, 114. As such, each Ethernet grouping 2 102; 1 110 of hosts or other endpoints 1-N 104; 1-N 112 may communicate within the grouping using the leaf switches and may communicate across groupings using spine switches or gateways 108. However, as each endpoint may not have full knowledge of its associated network, such endpoint-based congestion control may over-correct to a lowest denominator among multiple routes or paths, in terms of available downstream capacity, and may cause over-reduction of overall performance.

In at least one embodiment, a system 100 for global bandwidth-aware adaptive routing in a network communication includes at least one switch, such as a leaf switch that is closest to a local host to determine an event associated with a change in network bandwidth between a local host and a remote host, representing separate endpoints in the network communication. For example, a remote leaf switch 106 that is closest to a failure or congestion link of a remote host 1-N 104 may have information associated with the failure or congestion link. The remote leaf switch 106 is downstream from a local host 112 and a local leaf switch LS1 114, and is able to communicate such information to a local leaf switch 114. The local leaf switch LS1 114 is able to provide routing protocols for the network communication, where the routing protocols can be used to modify an adaptive routing in the leaf switch for selection from different routes for the network communication between the local host and the remote host. In this manner, it is possible to account for changes in network bandwidth in a remote host that is downstream relative to the at least one switch and relative to the local host.

In at least one embodiment, a system includes one or more circuits to be associated with at least one switch. The one or more circuits are to determine an event associated with a change in network bandwidth between a local host and a remote host. The one or more circuits are further to provide routing protocols for the network communication. The routing protocols may be used to modify an adaptive routing in the at least one switch for selection from different routes for the network communication between the local host and the remote host.

In at least one embodiment, a method for global bandwidth-aware adaptive routing in a network communication includes determining, using at least one switch, an event associated with a change in network bandwidth between a local host and a remote host. The method further includes modifying an adaptive routing in the at least one switch for selection from different routes for the network communication between the local host and the remote host. The method also includes providing routing protocols for the network communication to enable routing of communication between the local host and the remote host using one of the different routes that is based in part on the modification to the adaptive routing.

In at least one embodiment, such systems and method provide changes to adaptive routing as an algorithm that is otherwise unaware of downstream capacity by using downstream capacity information to augment adaptive routing decisions and to rebalance traffic based on the weights determined from the downstream capacity information. For example, in Border Gateway Protocol (BGP) for Ethernet communications, Weighted - Equal Cost Multipath (W-ECMP) link bandwidth extended community attribute may be used with a transitive propagation option, also referenced herein as routing protocol to modify aspects of an adaptive routing algorithm. This is such that when a link fails or a congestion event occurs within a fabric, a nearest router or switch (for example, within a predetermined hop distance from a local host associated with the event) sends advertisement or communication updates for affected routes and for next-hops with reduced bandwidth. In at least one embodiment, instead of BGP, any other protocol that has the capability of signaling relevant metadata, such as routing information, may embody the approaches herein for global bandwidth-aware adaptive routing in Ethernet communications.

In at least one embodiment, as a result, upstream routers or switches receiving the advertisements can determine different routes using updated relative weights in their respective adaptive routing algorithm. For example, an event may be converted to a weight, such as one of a lower, a neutral, or a higher weight, which may be used by a modification feature of the routing protocol to perform modification of the adaptive routing associated with the downstream traffic. This approach addresses failure or congestion events as they occur. An upstream router or switch's adaptive routing algorithm can cause distribution of traffic load according to the changed weights therein, which may be changed from the local states, such as queue length and port utilization. This enables avoidance of congestion and failure events by routing around such points in a network communication.

In at least one embodiment, a router or switch includes data paths of different routes subject to selection as part of the adaptive routing algorithm therein, which can be modified using weights from the routing protocol so that the adaptive routing algorithm is both weight-aware and weight-unaware of any adaptive routing hardware. With weight-aware hardware, adaptive routing simply makes rebalancing decision based on the path weights. With weight-unaware hardware, calculations may be enabled by the routing protocols herein so that an amount of transmission capacity is reduced from lower weight paths. This can be achieved by removing next-hop interfaces (such as, for transmission purpose) towards lower weight neighbors from a next-hop group. Both such approaches reflect routing protocols to be used to modify an adaptive routing in the at least one switch for selection from different routes for the network communication between the local host and the remote host. Adaptive routing makes aware of global bandwidth to a remote or destination host and can derive an amount of traffic sent across members of an ECMP arrangement. The system herein uses an interface that is associated with at least one switch to receive instructions to enable the determination of the event associated with the change in network bandwidth and to enable a determination of the routing protocols for the network communication. Once an event is received in a communication associated with the remote host, at least one hop in a series of next-hops to the remote host may be removed, as part of the routing protocols, based in part on the communication to provide the modification of the adaptive routing in the at least one switch.

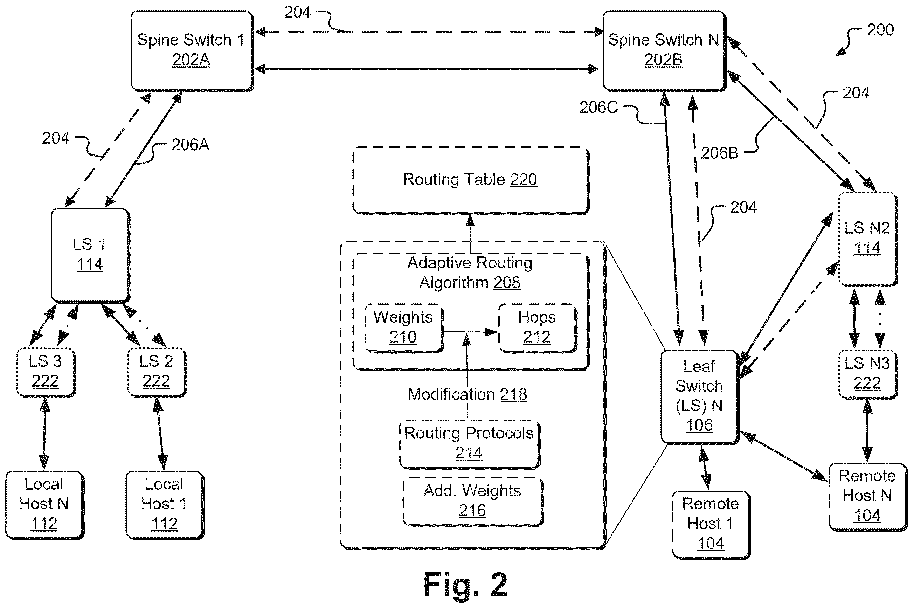

Fig. 2 illustrates aspects of a system 200 for global bandwidth-aware adaptive routing in Ethernet communications, according to at least one embodiment. The system 200 is subject, at least in part, to Border Gateway Protocol (BGP) that is used to determine best network routes for data communication links 206 using Ethernet. For example, switch or routers, including leaf switches and spine switches LSN 106, LS1 114, LSN2 114, SS1 202A, SSN 202B, can exchange routing information using advertisements 204 that are a specific type of configuration-based communication or messages about associated networks. This communication can include information about bandwidth associated with the networks. The leaf switches and spine switches LSN 106, LS1 114, LSN2 114, SS1 202A, SSN 202B capable of exchanging BGP or any other supported protocol's routing information may be referred to herein as peers or BGP peers. Therefore, these peers are not limited to BGP but may be in reference BGP or any other protocols having capability of signaling relevant meta-data for global bandwidth-aware adaptive routing in Ethernet communications.

Further, BGP may be considered as an exterior gateway protocol (EGP) that is used to exchange routing information among routers or switches that may be in different Ethernet groupings 1 110; 2 102. The routing information may include a complete route to each destination, such as, from a local host to a remote host. While BGP uses the routing information to prepare a routing table 220 and other tables associated with network reachability, it also enables switches or routers to exchange such information across the Ethernet groupings 1 110; 2 102. The BGP peers can, therefore, inform about routes between each other using the advertisements 204. For example, BGP peers can store routing tables 220 that may include routing information received from the advertisements 204, local routing information for local routes (such as not including a spine switch or gateway), and information that a BGP peer can advertise to other BGP peers in a separate advertisement. Further, the routing table 220 may be generated, in part, by an adaptive routing algorithm 208. The routing table 220 may be used by a routing process of the BGP peer to select a best or active route and may advertise this best or active route to other BGP peers. However, a BGP peer may be configured to advertise different routes to a same destination BGP peer or host.

A BGP peer that sends out a first advertisement for a route may assign the route one of different values to at least identify its origin and so that, during selection from one of different routes a lowest origin value may be selected. BGP also provides Equal Cost Multi-Path routing (ECMP) that uses multiple routes that may have similar or identical characteristics, such as, with reference to latency in the routes or with reference to link capacity. ECMP-based load-balancing for data communication links 206 may be enabled over different routes. Further, ECMP may be configured using an interface of a switch or router to allow up to 512 different routes for external BGP (EBGP) peers. As a result, a network may be scaled to increase a number of BGP peer connections a specified router or switch to improv latency and data flow.

In at least one embodiment, the advertisements 204 may include a BGP update. The BGP update may include a header; a listing of withdrawn routes, such as using internet protocol (IP) address prefixes associated with routes subject to being withdrawn from service or not reachable; infeasible route length of such withdrawn routes; route attributes, including a route origin, a multiple exit discriminator (MED), the origin's route preference, aggregation information, communities information, confederations information, and route reflection; network layer reachability information (NLRI), including those IP address prefixes of reachable routes being advertised; and a total route attribute length directed to route attributes for a reachable route to a destination BGP peer or host.

In at least one embodiment, weighted ECMP (or W-ECMP) herein can address a use of a bandwidth community attribute that is advertised as a reflection of the available capacity. For example, when one data communication link 206C between one spine switch SSN 202B and a leaf switch LSN 106 fails, representing a failure that is downstream from other leaf switches LS1-LSN2 114, LS2-LSN3 222 and a local host 1-N 112, these other leaf switches may receive a BGP update in an advertisement 204 with reduced weights for prefixes destined behind the leaf switch LSN 106 and for the next-hops till the spine switch SSN 202B at issue. Although illustrated as a direct coupling between each one spine switch SS1 202A, SSN 202B and a leaf switch LSN 106, there may be BGP peers, such as other routers or switches LS1-LSN2 114, LS2-LSN3 222 requiring the further hops between a local host and a remote host. The reduced weights for the prefixes destined behind leaf switch LSN 106 and for the next-hops till the spine switch SSN 202B (such as using another data communication link 206B) enable only the affected prefixes to experience a change in load distribution and can converge at predetermined capacity (such as, a ratio, 5/6th of a total theoretical bandwidth).

Therefore, in at least embodiment, Fig. 2 illustrates a system 200 for global bandwidth-aware adaptive routing in a network communication using at least leaf switch LSN 106 to determine an event associated with a change in network bandwidth between a local host 1-N 112 and a remote host 1-N 104. The change may be a failure or a congestion event to one data communication link 206C. The at least leaf switch LSN 106 can provide routing protocols 214 for the network communication. The network communication can include the advertisements 204 sent from the at least one leaf switch LSN 106 to spine switches SS1 202A, LS1 114, LSN2 114, SSN 202B, LS2-N3 222 in the network. The routing protocols 214 can be used to modify 218 an adaptive routing, such as the adaptive routing algorithm 208, in the at least one switch LSN 106. The modification 218 is for selection from different routes, represented by different hops 212, for the network communication between the local host and the remote host. The different hops 212 enable the use of a different route, such as using a data communication link 206B from another leaf switch N2 114 to the spine switch SSN 202B.

In at least one embodiment, Fig. 2 also illustrates that the system 200 includes multiple links between each leaf switch LSN 106 to each spine switch SSN 202B, even though this is not illustrated for all leaf switches and for all spine switches. The system 200 is able to recognize an event as being a failed or congested data communication link 206C in at least one of different routes between the local host 1-N 112 and the remote host 1-N 104. Such a failed or congested data communication link 206C may be one of the links (the other being data communication link 206B) between a leaf switch LSN 106 and a spine switch SSN 202B. Further, the failed or congested link may cause the change in the network bandwidth between the local host and the remote host. For example, the network bandwidth may be monitored based at least in part on a comparison to pre-determined hop times used for monitoring data packets transmitted through the different routes. When a hop time for at least one link exceeds a pre-determined hop time, the link may be considered in an event of failure or congestion.

In at least one embodiment, the system 200 uses the routing protocols 214 with a BGP-enabled network that is enabled for communication of events, such as, routing information associated with the failed or congested data communication link 206C, between the at least one switch and other switches in the network communication. Further, the routing protocols 214 includes a conversion feature to convert the event from an advertisement 204 or from a monitored event to weighting values, such as the additional weights 216. The routing protocols 214 include a modification feature to be used to perform the modification 218 of the adaptive routing algorithm 208 using the weighting values.

In at least one embodiment, the modification 218 to the adaptive routing algorithm 208 includes additional weights 216 to a number of different hops 212 that provides different data communication links 206A-C for the network communication between the local host and the remote host. The additional weights may be incorporated in any manner suitable to the disclosure herein, including to normalize or ration part of the weights 210 of the adaptive routing algorithm 208. The weight change removes at least one of the next-hops so that at least the failure or congestion data communication link 206C may be bypassed. Instead, another data communication link 206B may be used. In at least one embodiment, at least one leaf switch LSN 106 includes an interface, such as command line interface (CLI), to receive instructions to enable the determination of the event associated with the change in network bandwidth and to enable a determination of the routing protocols 214 for the network communication. For example, an administrator of one part or an entire network can enable at least software and firmware changes to provide the W-ECMP approaches herein.

In at least one embodiment, the at least one leaf switch LSN 106 is within a predetermined hop distance from the remote host 1 104. For example, the leaf switch LSN 106 is the closest switch that is one hop from the remote host 1 104. The leaf switch LSN 106 includes an adaptive routing algorithm 208 to perform aspects described herein for the global bandwidth-aware adaptive routing in the network communication. Further, the at least one leaf switch LSN 106 is further able to receive the event in an advertisement 204 communication associated with the remote host, such as from the spine switch SSN 202B that is the highest grouping-related switch associated with multiple remote hosts 1-N 104. The at least one leaf switch LSN 106 is further able to remove at least one of the hops of a number of next-hops to the remote host. For example, the hops associated with the one leaf switch LSN 106 is enabled to be bypassed and, instead, a routing table 220 is updated by the adaptive routing algorithm 208 to include hops using a further leaf switch N2 114 to provide a different data communication link 206B, as part of the routing protocols. The further leaf switch N2 114 is also able to provide the different data communication link 206B based in part on the advertisements 204 communicated to the further leaf switch N2 114 to provide modification of its adaptive routing.

In at least one embodiment, therefore the system 200 includes one or more circuits to be associated with at least one leaf switch N 114. However, the one or more circuits may be across multiple switches enabled to perform the W-ECMP approaches herein. In some implementations, other devices may be enabled to perform the systems and methods described herein. For example, a computing device such as a server or any other type of computer which may be in communication with a network, such as via a network interface controller (NIC) may implement the systems and perform the methods described herein. The one or more circuits may include at least an execution unit of a processor to determine an event associated with a change in network bandwidth between a local host and a remote host. The one or more circuits can provide routing protocols for the network communication so that the routing protocols can be used to modify an adaptive routing in the at least one switch for selection from different routes for the network communication between the local host and the remote host.

In at least one embodiment, Free Range Routing (FRR) may be used with W-ECMP approaches herein. FRR includes network routing software features to provide protocol daemons for BGP and can perform operations on Unix^{®}-like platforms, including Linux^{®}, Solaris^{®}, OpenBSD^{®}, FreeBSD^{®}, and NetBSD^{®}. Further, FRR in BGP can operate in multiple autonomous systems simultaneously with virtual routing and forwarding. In at least one embodiment, adaptive routing occurs in a transparent manner to the kernel of the operating system and to the FRR requirements.

In at least one embodiment, FRR provides a next-hop group (NHG) to reach a determined prefix. The NHG is provided whenever there is a change in next-hop weights, such as a reduction and/or increase in weight for some of the next-hops. The FRR may be enabled as part of the routing protocols 214 to include a conversion feature to convert a community value of an advertisement 204, such as an incoming community value reflecting a downstream bandwidth event, into proportionated weight to provide the additional weight 216, among the W-ECMP members in such a way that a cumulative value of individual weights 210 is normalized to 100. The adaptive routing algorithm 208 can rely on the weight associated with individual neighbor or next-hop groups and the available active next-hop links to derive the actual number of links to be changed, which reflects the modification 218 of an adaptive routing in the at least one switch for selection from different routes for the network communication between the local host and the remote host.

As used herein, the term next-hop may refer to a link between two devices which are physically connected, such as by a cable. A next-hop may be a device-to-device connection which does not include any other devices between the two devices. As an example, a leaf switch may be directly connected to one or more spine switches which provide communication between the leaf switch and other leaf switches. The link between the leaf switch and the spine switches may be considered a next-hop.

As used herein, an active next-hop may refer to a link which is capable of being used to transmit data between one or more devices (such as switches). An inactive next-hop may be a link which is not current capable of being used to transmit data between devices. As an example, a link may be active when it is powered and capable of being selected by a device for transmitting a packet or non-packetized data. An active link may be deactivated and made inactive, resulting in the link being no longer capable of being used to transmit data. An inactive link may involve components which are in a low power or sleep mode and which require being activated prior to being used to transmit data.

In at least one embodiment, a neighbor group is a grouping of different links between two or more switches. The neighbor group may be provided as a forwarding entity, such as a group of switches and routers, to enable rebalance of data communication towards a specific remote host that uses the grouping of different links and that uses a global identifier per switch in the different links. For example, to calculate an additional weights towards different peers, approaches herein account for all the next-hops, which may be more than one and which connect to the same peer. A determination of all the next-hops may be provided by a controller, which operates as a control plane of the network, such as a gateway or spine switch 108, in FIG. 1, herein. The controller provides all the next-hops to a forwarding entity, such as a switch or a router. Alternatively, the identification can be inferred by the forwarding entity from a next-hop attribute that is encoded with the global identifier, such as a next MAC address.

In at least one embodiment, grouping of next-hops into unique neighbor groups may be performed as part of the routing protocols 214. There may be multiple links connecting a particular leaf switch and one or more spine switches. The routing protocols 214 ensures that the neighborship (or grouping) information to decide which link(s) to remove is in an order to reduce a bandwidth capacity to a specific spine switch. For example, to identify all the next-hops connected to a specific BGP peer, an assignment of a same base-MAC (media access control) address to all of the adaptive routing (AR)-enabled ports in a BGP peer may be performed. There may be no change in behavior for the non-AR enabled ports which may include unique MAC addresses assigned for each of the non-AR enabled physical ports. Application programming interfaces (APIs) may be provided for setting the base-MAC. This approach ensures that all the next-hops having the same neighbor MAC would be termed as "neighbor-group" and implies that the next-hops belonging to the same neighbor-group are hosted from the same BGP peer.

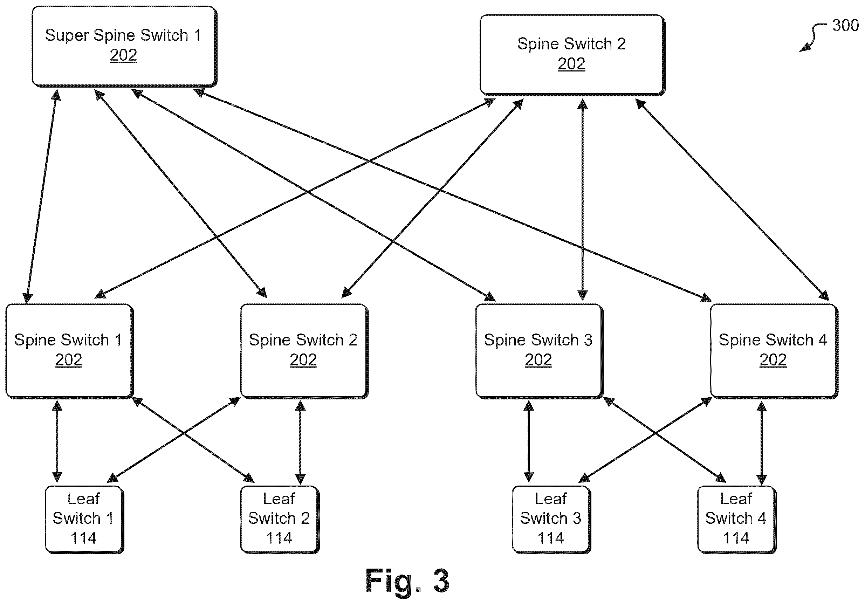

Fig. 3 illustrates a topology 300 associated with a system for global bandwidth-aware adaptive routing in Ethernet communications, according to at least one embodiment. In at least one embodiment, global bandwidth-aware adaptive routing may be provided an algorithm represented by the routing protocols 214. The routing protocols 214 may be applied under certain conditions and following procedures described with respect to Fig. 3. For example, the routing protocols 214 may be applied only if all the next-hops are to be provided over ports of switches capable of adaptive routing 208. In addition, the routing protocols 214 may be applied only if there are more than one next-hop in the NHG, only if there are more than one neighbor group in the NHG (where the neighbor group can be identified with a unique next-hop MAC), or only if there are next-hops with varying weights (such as, if all the next-hops have a same weight, then there may be no exclusions or modifications associated with the next-hops).

In at least one embodiment, when next-hops belong to a same neighbor group and include different weights, then routing protocols 214 need not perform exclusions to these next-hops as they represent an asymmetric topology. In at least one embodiment, the routing protocols 214 may be performed by a loop-through of all the next-hops to identify a next-hop and its associated neighbor group which has the highest weight (also referred to as a maximum weight, herein) among the other neighbor-group. Then, the routing protocols 214 can include an iteration process to iterate over each of the next-hops present in the NHG. In the iteration, if a particular neighbor group has only a single next-hop, then there may be no need to apply exclusions or modifications as described herein. Then, a next-hop may be added to the active next-hop list for an ECMP group.

In at least one embodiment, the routing protocols 214 includes that if a weight of a next-hop matches with the maximum weight then also there may be no need to apply the exclusions or modifications as described herein. Instead, all such next-hops may be added to the active next-hop list for the ECMP group. Further, the routing protocols 214 includes determining a weight reduction ratio. The weight reduction ratio may be determined for each neighbor group other than the one having the maximum weight. Derivation of the weight reduction ratio may be performed between the weight of a current neighbor group and that of a neighbor group that has maximum weight. For example, when one of a neighbor group's weight is 33 and a maximum weight is 66, then the ratio may be determined as 50%, 0.50, or ½). To derive the weight reduction ratio, a division of the neighbor group's weight by maximum weight may be performed.

In at least one embodiment, the routing protocols 214 includes determination of an actual number of next-hops to be excluded or modified based on a number of factors. In some implementations, the exclusion or modification of the number of next-hops may be based on the weight reduction ratio as determined above and may be based on a total number of next-hops available in the neighbor group. For example, for a weight reduction ratio of current neighbor group that is 25%, a reduction of the next-hop capacity of the neighbor group to one-fourth of total next-hop count may be needed. If the total next-hop count is sixteen, the number of next-hops to prune would be 12. This reduction may be referred to as a theoretical number of next-hops to prune. As described below, the actual number of next-hops to prune for a particular switch may be determined by subtracting the difference between the number of next-hops connected to the neighbor group with the maximum number of active next-hops and the number of active next-hops connected to the particular switch from the theoretical number of next-hops to prune.

As an example, in the illustrated topology 300 that is subject to the routing protocols 214 described above, there are two super spine switches 202, four spine switches 202with four leaf switches 114 connected thereto. Each arrow connecting the spine switches 202, super spine switches 202, and leaf switches 114 may represent multiple links. As an example, each of spine switches 1, 2, 3, and 4 202 may be connected with each super spine switch 202 via sixteen paths. Due to any number of factors, one or more paths between the spine switches 1, 2, 3, and 4 and the super spine switches 1 and 2 may become inactive, such as due to congestion or other network issues. Paths which are operating as expected may be considered to be active.

The following are example scenarios in which the disclosed systems and methods of excluding or modifying the number of next-hops may be implemented in a topology 300 as illustrated in Fig. 3. In each of the scenarios described below, each of the arrows illustrated in Fig. 3 represents sixteen parallel links interconnecting the nodes.

In a first scenario, each of the links are active. As such, route prefixes behind leaves 3 and 4 for spines 1 and 2 may have equal bandwidth via super-spines 1 and 2. As a result, no link pruning (i.e., modifying the number of links or excluding one or more links) would occur.

In a second scenario, consider eight links out of the sixteen between super spine switch 1 202 and each of spine switches 3 and 4 202 becoming inactive, while all other links illustrated in Fig. 3 remain active. As such, on spines switches 1 and 2 202, route prefixes behind leaf switches 3 and 4 may have less bandwidth via super-spine 1 as compared to super-spine 2. Spine switch 1 202 has an equal number of links (sixteen) connecting to both super spine switches 1 and 2 202, so the available paths from spine switch 1 202 to leaf switches 3 and 4 via super-spines 1 and 2 are equal. Because of the remote link-failure between super spine switch 1 and spine switches 3 and 4, spine switches 1 and 2 would receive 50 % less BGP-link-bandwidth advertised from super spine switch 1 as compared to super spine switch 2. In response, both spine switches 1 and 2 would prune 50 % (i.e., eight out of sixteen) of the links going towards super spine switch 1 based on the theoretical number of next-hops to be pruned. As a result, spine switches 1 and 2 would prune eight links each towards super spine switch 1 as part of the routing protocols 214.

In a third scenario, consider eight links out of the sixteen links between super spine switch 1 202 and each of spine switches 3 and 4 202 becoming inactive, four links out of the sixteen links between super spine switch 1 202 and spine switch 1 202 becoming inactive, and the other links illustrated in Fig. 3 remaining active. As such, on spine switches 1 and 2 202, route prefixes behind leaf switches 3 and 4 have less bandwidth via super spine switch 1 as compared to super spine switch 2 which has all sixteen links available to spine switches 3 and 4.

Because spine switch 1 has lost four links out of sixteen towards super spine switch 1, and spine switch 1 has all sixteen links connecting to super spine switch 2, the available paths via super spine switches 1 and 2 are not equal due to the local link failure on spine switch 1 towards super spine switch 1. Because of the remote link-failures between super spine switch 1 and spine switches 3 and 4, spine switches 1 and 2 would receive 50 % less BGP-link-bandwidth advertised from super spine switch 1 as compared to super spine switch 2. In response to that, both spine switches 1 and 2 would theoretically decide to prune 50 % (i.e., 8 out of 16) of links going towards super-spine switch 1. However, since spine switch 1 has already lost four links towards super spine switch 1, it is not optimal or efficient to prune eight of the links between spine switch 1 and super spine switch 1.

To prune an optimal, or near-optimal, number of links between spine switch 1 and super spine switch 1, using a system or method as described herein, the following logic may be used to determine a number of links to prune: Lp = Lt - (Lm - Ls), where Lp is the actual number of links to prune, Lt is the theoretical number of links to prune, Lm is the number of links connected to the maximum neighbor group, and Ls is the number of active links connected to the specific switch being considered. The theoretical number of links to prune (Lt) may be calculated, as described above, by the number of interfaces connecting the switch to a neighbor multiplied by the complement of the weight ratio between the neighbor and the switch with the highest weight. The number of links connected to the maximum neighbor group (Lm) may be determined by comparing the number of links between each of the switches which provide next-hops in a neighbor group and finding the maximum number. The number of active links connected to the specific switch being considered (Ls) may be determined for a specific switch by determining the number of active links connecting that specific switch to the spine switch. If the actual number of links to prune (Lp) is at least one, then that number of links may be pruned from the equal-cost multipaths.

To apply this logic in the third scenario, for determining a number of links to prune on spine switch 1 towards super spine switch 1, Lm would be sixteen (the number of active links between spine switch 2 and super spine switch 1), Ls would be twelve (the number of active links between spine switch 1 and super spine switch 1), and Lt would be eight (the theoretical number of links to prune based on the BGP-link-bandwidth advertised from super spine switch 1 as compared to super spine switch 2). This results in a calculation of eight minus the difference between sixteen and twelve, for a total of four links to be pruned.

To determine a number of links to prune on spine switch 2 towards super spine switch 1 in the third scenario, the only different variable would be Ls, the number of links connected to the specific neighbor. Because spine switch 2 has the maximum number of links connected to super spine switch 1, there would be no difference between the theoretical number of links to prune and the actual number of links to prune.

In a fourth scenario, consider super-spine switch 1 losing eight links (out of sixteen) to each of spine switches 3 and 4, and spine switch 1 losing eight links (out of sixteen) to super spine switch 1. As such, route prefixes on spine switches 1 and 2 behind leaf switches 3 and 4 have less bandwidth via super-spine switch 1 as compared to super-spine switch 2 which has all sixteen links available to spine switches 3 and 4.

The available paths between spine switch 1 and leaf switches 3 and 4 via super-spine switch 1 and super-spine switch 2 are not equal due to the local link failure on spine switch 1 towards super-spine switch 1. Because of the remote link-failures between super-spine switch 1 and spine switches 3 and 4, the spine switches 1 and 2 would receive 50 % less BGP-link-bandwidth advertised from super-spine 1 as compared to super-spine 2. In response to the advertised BGP-link-bandwidth, both spine switches 1 and 2 would theoretically seek to prune 50 % (i.e., 8 out of 16) of links towards super-spine switch 1.

However, since spine switch 1 has already lost eight links towards super-spine switch 1, it is not optimal or efficient to prune eight additional links between spine switch 1 and super-spine switch 1. Using the logic described above, in accordance with the systems and methods described herein, it would be optimal or near-optimal to prune only the number of links after deducting the local link failures, based on Lp = Lt - (Lm-Ls). In the fourth scenario, this results in a calculation for spine switch 1 of Lp = 8 - (16-8), for a total of zero links to prune, and a calculation for spine switch 2 of Lp = 8 - (16-16), for a total of eight links to prune. Hence, on spine switch 1 there is no need to prune any links towards super-spine switch 1, as the actual number of links to be pruned comes to zero. On spine switch 2, eight links can be pruned towards super-spine switch 1 as spine switch 2.

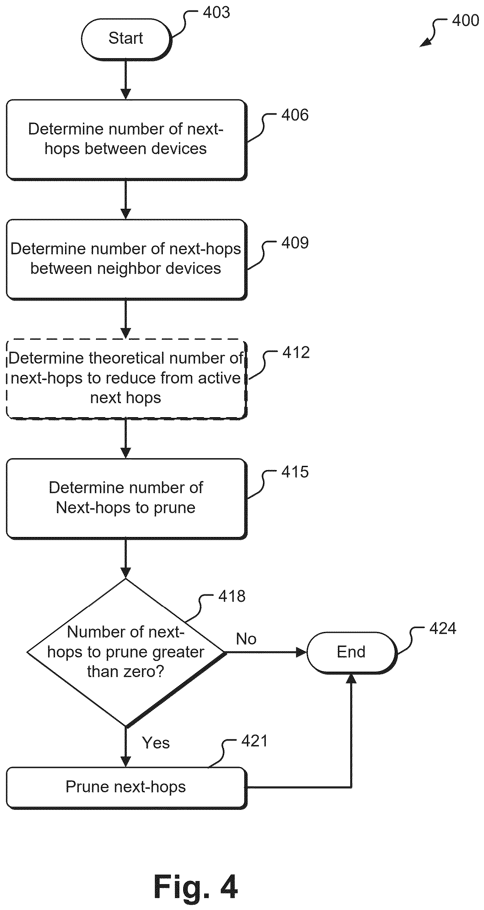

Fig. 4 illustrates a process flow or method 400 in a system of Figs. 1-3 for global bandwidth-aware adaptive routing in Ethernet communications, according to at least one embodiment. The method 400 starts at 403 and ends at 424. The method 400 may be performed using a switch or other computing device. In some implementations, the method 400 may begin in response to detecting an event associated with a change in network bandwidth between a local host and a remote host. The event may be, for example, a failed or congested link in the different routes between the local host and the remote host. Such a failed or congested link can cause the change in the network bandwidth between the local host and the remote host. The method 400 may include the use of adaptive routing to provide a routing table of different routes and which is subject to modification.

Using the method 400, links between a first device, such as a NIC of a computing device, a leaf switch, a spine switch, or a super-spine switch, and a remote device, such as a leaf switch, a spine switch, or a super-spine switch may be pruned to an optimal or near-optimal number. These links, or next-hops, between the first device and the remote device may form a group of paths for network communication. The first device may be one of a plurality of devices forming a neighbor group. For example, and as illustrated in Fig. 3, spine switches 1 and 2 202 may form a neighbor group providing a group of paths for network communication between leaf switches 1 and 2 114 and super spine switches 1 and 2 202, spine switches 3 and 4 202, and leaf switches 3 and 4 114. While not shown in Fig. 3, local and remote host devices may communicate via leaf switches 1, 2, 3, and 4 114. Further, while Fig. 3 shows a particular network topology, it should be appreciated that the systems and methods described herein may be used in relation to other topologies.

The number of links, or next-hops, between the first device and the remote device to prune may be determined based on a current number of active links between the first device and the remote device, a current number of active links between other devices in the neighbor group with the first device and the remote device, as well as in some implementations a theoretical number of links to prune calculated as described above. The method 400 may be used to determine the number of links to prune and to automatically prune the links.

At 406, a number of next-hops between the first device and the remote device may be determined. Determining the number of next-hops between the first device and the remote device may include determining a total number of active links between the first device and the remote device. As should be appreciated, one or more links between the first device and the remote device may be inactive. In some implementations, a current number of active links may be stored in memory of the system performing the method 400 and may be accessed as a part of performing the method 400. For example, the device performing the method 400 may be configured to poll a database or a registry to identify the number of next-hops between the first device and the remote device.

At 409, a number of next-hops between devices in the same neighbor group as the first device and the remote device may be determined. Determining the number of next-hops between the devices in the same neighbor group as the first device and the remote device may include determining a total number of active links between each of the devices and the remote device. In some implementations, a current number of active links may be stored in memory of the system performing the method 400 and may be accessed as a part of performing the method 400. For example, the device performing the method 400 may be configured to poll a database or a registry to identify the number of next-hops between each of the devices and the remote device.

Optionally, at 412, a theoretical number of next-hops to reduce from the next-hops between the first device and the remote device may be determined. As described above, the theoretical number may be determined based on weighting values converted from BGP data received by the system performing the method 400.

At 415, the number of next-hops to prune may be determined. As described above, in relation to the third and fourth scenario, the following logic may be used to determine a number of links to prune: Lp = Lt - (Lm - Ls), where Lp is the actual number of links to prune, Lt is the theoretical number of links to prune, Lm is the number of links connected to the maximum neighbor group, and Ls is the number of active links connected to the specific switch being considered.

At 418, a determination may be made as to whether the number of next-hops to prune is greater than zero. At 421, if the number of next-hops to prune is greater than zero, then the next-hops may be pruned by reducing the number of links between the first device and the remote device by the number of next-hops to prune. At 424, after either pruning the next-hops at 421 or determining the number of next-hops to prune is not greater than zero, then the method 400 may end.

After the method 400 is performed, the method 400 may be repeated for a second device in the neighbor group. In some implementations, the method 400 may be executed in parallel for all devices in a neighbor group. In this way, active next-hops between each device in a neighbor group and a remote device may be reduced based on a total number of next-hops between the remote device and each device in the neighbor group and a respective number of active next-hops between the remote device and each particular device in the neighbor group.

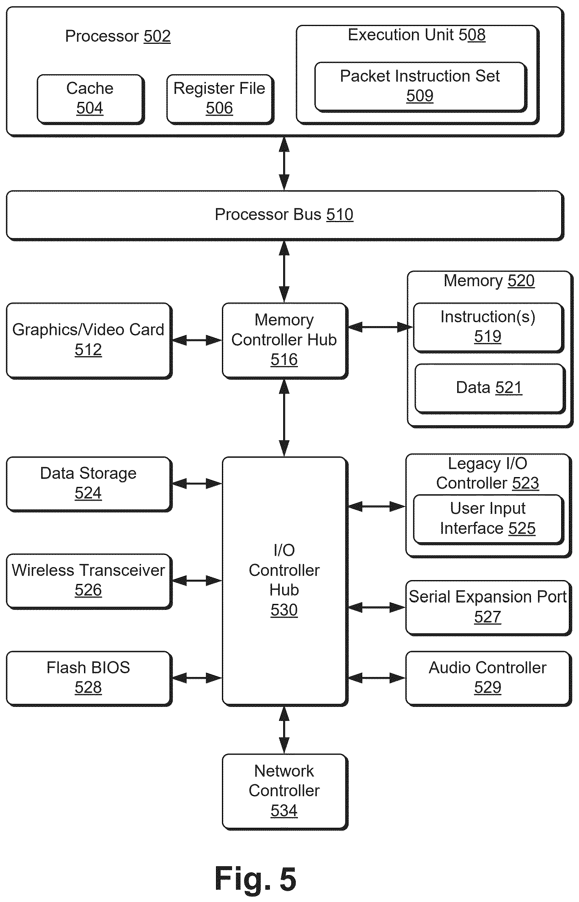

Fig. 5 illustrates a computer system 500, in accordance with at least one embodiment. In at least one embodiment, computer system 500 may be a system with interconnected devices and components, an SOC, or some combination. In at least one embodiment, computer system 500 is formed with a processor 502 that may include execution units to execute an instruction. In at least one embodiment, computer system 500 may include, without limitation, a component, such as processor 502 to employ execution units including logic to perform algorithms for processing data. In at least one embodiment, computer system 500 may include processors, such as PENTIUM^{®} Processor family, Xeon^{™}, Itanium^{®}, XScale^{™} and/or StrongArm^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 500 may execute a version of WINDOWS' operating system available from Microsoft Corporation of Redmond, Wash., although other operating systems (UNIX and Linux for example), embedded software, and/or graphical user interfaces, may also be used.

In at least one embodiment, computer system 500 may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor (DSP), an SoC, network computers ("Net PCs"), set-top boxes, network hubs, wide area network ("WAN") switches, or any other system that may perform one or more instructions.

In at least one embodiment, computer system 500 may include, without limitation, processor 502 that may include, without limitation, one or more execution units 508 that may be configured to execute a Compute Unified Device Architecture ("CUDA") (CUDA^{®} is developed by NVIDIA Corporation of Santa Clara, CA) program. In at least one embodiment, a CUDA program is at least a portion of a software application written in a CUDA programming language. In at least one embodiment, computer system 500 is a single processor desktop or server system. In at least one embodiment, computer system 500 may be a multiprocessor system. In at least one embodiment, processor 502 may include, without limitation, a CISC microprocessor, a RISC microprocessor, a VLIW microprocessor, a processor implementing a combination of instruction sets, or any other processor device, such as a digital signal processor, for example. In at least one embodiment, processor 502 may be coupled to a processor bus 510 that may transmit data signals between processor 502 and other components in computer system 500.

In at least one embodiment, processor 502 may include, without limitation, a Level 1 ("L1") internal cache memory ("cache") 504. In at least one embodiment, processor 502 may have a single internal cache or multiple levels of internal cache. In at least one embodiment, cache memory may reside external to processor 502. In at least one embodiment, processor 502 may also include a combination of both internal and external caches. In at least one embodiment, a register file 506 may store different types of data in various registers including, without limitation, integer registers, floating point registers, status registers, and instruction pointer register.

In at least one embodiment, execution unit 508, including, without limitation, logic to perform integer and floating-point operations, also resides in processor 502. Processor 502 may also include a microcode ("ucode") read only memory ("ROM") that stores microcode for certain macro instructions. In at least one embodiment, execution unit 508 may include logic to handle a packed instruction set 509. In at least one embodiment, by including packed instruction set 509 in an instruction set of a general-purpose processor 502, along with associated circuitry to execute instructions, operations used by many multimedia applications may be performed using packed data in a general-purpose processor 502. In at least one embodiment, many multimedia applications may be accelerated and executed more efficiently by using full width of a processor's data bus for performing operations on packed data, which may eliminate a need to transfer smaller units of data across a processor's data bus to perform one or more operations one data element at a time.

In at least one embodiment, execution unit 508 may also be used in microcontrollers, embedded processors, graphics devices, DSPs, and other types of logic circuits. In at least one embodiment, computer system 500 may include, without limitation, a memory 520. In at least one embodiment, memory 520 may be implemented as a DRAM device, an SRAM device, flash memory device, or other memory device. Memory 520 may store instruction(s) 519 and/or data 521 represented by data signals that may be executed by processor 502.

In at least one embodiment, a system logic chip may be coupled to processor bus 510 and memory 520. In at least one embodiment, the system logic chip may include, without limitation, a memory controller hub ("MCH") 516, and processor 502 may communicate with MCH 516 via processor bus 510. In at least one embodiment, MCH 516 may provide a high bandwidth memory path 518 to memory 520 for instruction and data storage and for storage of graphics commands, data and textures. In at least one embodiment, MCH 516 may direct data signals between processor 502, memory 520, and other components in computer system 500 and to bridge data signals between processor bus 510, memory 520, and a system I/O 522. In at least one embodiment, system logic chip may provide a graphics port for coupling to a graphics controller. In at least one embodiment, MCH 516 may be coupled to memory 520 through high bandwidth memory path 518 and graphics/video card 512 may be coupled to MCH 516 through an Accelerated Graphics Port ("AGP") interconnect 514.

In at least one embodiment, computer system 500 may use system I/O 522 that is a proprietary hub interface bus to couple MCH 516 to I/O controller hub ("ICH") 530. In at least one embodiment, ICH 530 may provide direct connections to some I/O devices via a local I/O bus. In at least one embodiment, local I/O bus may include, without limitation, a high-speed I/O bus for connecting peripherals to memory 520, a chipset, and processor 502. Examples may include, without limitation, an audio controller 529, a firmware hub ("flash BIOS") 528, a wireless transceiver 526, a data storage 524, a legacy I/O controller 523 containing a user input interface 525 and a keyboard interface, a serial expansion port 527, such as a USB, and a network controller 534. Data storage 524 may comprise a hard disk drive, a floppy disk drive, a CD-ROM device, a flash memory device, or other mass storage device.

In at least one embodiment, Fig. 5 illustrates a system, which includes interconnected hardware devices or "chips." In at least one embodiment, Fig. 5 may illustrate an example SoC. In at least one embodiment, devices illustrated in Fig. 5 may be interconnected with proprietary interconnects, standardized interconnects (e.g., PCIe), or some combination thereof. In at least one embodiment, one or more components of system 500 are interconnected using compute express link ("CXL") interconnects.

In at least one embodiment, the computer system 500 may be used to implement the local leaf switch 106; 114, the local host 112, the remote host 104, and/or the interconnect devices 120 (See Fig. 1). In at least one embodiment, the local leaf switch 106; 114, the local host 112, the remote host 104, and/or the interconnect devices 120 may include the processor 502 and/or the graphics/video card 512. In at least one embodiment, one or more systems depicted in Fig. 5 are utilized to implement one or more systems and/or processes such as those described in connection with Figs. 1-4.

It is to be appreciated that any feature described herein can be claimed in combination with any other feature(s) as described herein, regardless of whether the features come from the same described embodiment.

Specific details were given in the description to provide a thorough understanding of the embodiments. However, it will be understood by one of ordinary skill in the art that the embodiments may be practiced without these specific details. In other instances, well-known circuits, processes, algorithms, structures, and techniques may be shown without unnecessary detail in order to avoid obscuring the embodiments.

While illustrative embodiments of the disclosure have been described in detail herein, it is to be understood that the inventive concepts may be otherwise variously embodied and employed, and that the appended claims are intended to be construed to include such variations, except as limited by the prior art.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system for global bandwidth-aware adaptive routing in a network communication, the system comprising one or more circuits to:
   reduce a number of active next-hops between the system and a first device of a plurality of devices based at least in part on a total number of next-hops between the system and the plurality of devices and a total number of active next-hops between the system and the first device.
Clause 2. The system of clause 1, wherein the number of active next-hops between the system and the first device is reduced based further on a theoretical number of next-hops to reduce from the number of active next-hops between the system and the first device.
Clause 3. The system of clause 2, wherein the theoretical number of next-hops to reduce from the number of active next-hops between the system and the first device is determined based on weighting values converted from Border Gateway Protocol (BGP) data received by the system.
Clause 4. The system of clause 1, wherein the next-hops between the system and the first device form a group of paths for the network communication between the system and the first device.
Clause 5. The system of clause 1, wherein the system is further to reduce a number of active next-hops between the system and a second device based at least in part on the total number of next-hops between the system and the plurality of devices and a total number of active next-hops between the system and the second device.
Clause 6. The system of clause 1, wherein the system reduces the number of active next-hops between the system and the first device based at least in part on a difference between the total number of next-hops between the system and the first device and the total number of active next-hops between the system and the plurality of devices.
Clause 7. The system of clause 6, wherein one or more of the next-hops between the system and the first device are inactive.
Clause 8. The system of clause 1, wherein one of: the system is a network interface controller (NIC) and the first device is a leaf switch; the system is a leaf switch and the first device is a spine switch; the system is the spine switch and the first device is the leaf switch; the system is the spine switch and the first device is a super-spine switch; and the system is the super-spine switch and the first device is the spine switch.
Clause 9. A communication device comprising one or more circuits to:
   determine a total number of active next-hops between the communication device and a first remote device of a plurality of remote devices;
   determine a total number of next-hops between the communication device and the plurality of remote devices; and
   reduce the total number of active next-hops between the communication device and the remote device based at least in part on the total number of next-hops between the communication device and the first remote device and the total number of next-hops between the communication device and the plurality of remote devices.
Clause 10. The communication device of clause 9, wherein the number of active next-hops between the communication device and the first remote device is reduced based further on a theoretical number of next-hops to reduce from the number of active next-hops between the communication device and the first remote device.
Clause 11. The communication device of clause 10, wherein the theoretical number of next-hops to reduce from the number of active next-hops between the communication device and the first remote device is determined based on weighting values converted from Border Gateway Protocol (BGP) data received by the communication device.
Clause 12. The communication device of clause 9, wherein the next-hops between the communication device and the first remote device form a group of paths for network communication between the communication device and the first remote device.
Clause 13. The communication device of clause 9, wherein the communication device is further to reduce a number of active next-hops between the communication device and a second remote device based at least in part on a total number of next-hops between the communication device and the second remote device and the total number of active next-hops between the communication device and the plurality of remote devices.
Clause 14. The communication device of clause 9, wherein the communication device reduces the number of active next-hops between the communication device and the first remote device based at least in part on a difference between the total number of next-hops between the communication device and the first remote device and the total number of next-hops between the communication device and the plurality of remote devices.
Clause 15. The communication device of clause 9, wherein one or more of the next-hops between the communication device and the first remote device are inactive.
Clause 16. The communication device of clause 9, wherein one of: the communication device is a network interface controller (NIC) and the first remote device is a leaf switch; the communication device is a leaf switch and the first remote device is a spine switch; the communication device is the spine switch and the first remote device is the leaf switch; the communication device is the spine switch and the first remote device is a super-spine switch; and the communication device is the super-spine switch and the first remote device is the spine switch.
Clause 17. A method, comprising:
   determining a total number of active next-hops between a communication device and a first remote device of a plurality of remote devices;
   determining a total number of active next-hops between the communication device and the plurality of remote devices; and
   reducing the total number of active next-hops between the communication device and the first remote device based at least in part on the total number of next-hops between the communication device and the plurality of remote devices and the total number of active next-hops between the communication device and the first remote device.
Clause 18. The method of clause 17, wherein the number of active next-hops between the communication device and the remote device is reduced based further on a theoretical number of next-hops to reduce from the number of active next-hops between the communication device and the remote device.
Clause 19. The method of clause 18, wherein the theoretical number of next-hops to reduce from the number of active next-hops between the communication device and the first remote device is determined based on weighting values converted from Border Gateway Protocol (BGP) data received by the communication device.
Clause 20. The method of clause 17, wherein the next-hops between the communication device and the first remote device form a group of paths for network communication between the communication device and the first remote device.

## Claims

1. A system for global bandwidth-aware adaptive routing in a network communication, the system comprising one or more circuits to:
reduce a number of active next-hops between the system and a first device of a plurality of devices based at least in part on a total number of next-hops between the system and the plurality of devices and a total number of active next-hops between the system and the first device.

2. The system of claim 1, wherein the number of active next-hops between the system and the first device is reduced based further on a theoretical number of next-hops to reduce from the number of active next-hops between the system and the first device.

3. The system of claim 2, wherein the theoretical number of next-hops to reduce from the number of active next-hops between the system and the first device is determined based on weighting values converted from Border Gateway Protocol (BGP) data received by the system.

4. The system of any preceding claim, wherein the next-hops between the system and the first device form a group of paths for the network communication between the system and the first device.

5. The system of any preceding claim, wherein the system is further to reduce a number of active next-hops between the system and a second device based at least in part on the total number of next-hops between the system and the plurality of devices and a total number of active next-hops between the system and the second device.

6. The system of any preceding claim, wherein the system reduces the number of active next-hops between the system and the first device based at least in part on a difference between the total number of next-hops between the system and the first device and the total number of active next-hops between the system and the plurality of devices.

7. The system of claim 6, wherein one or more of the next-hops between the system and the first device are inactive.

8. The system of any preceding claim, wherein one of: the system is a network interface controller (NIC) and the first device is a leaf switch; the system is a leaf switch and the first device is a spine switch; the system is the spine switch and the first device is the leaf switch; the system is the spine switch and the first device is a super-spine switch; and the system is the super-spine switch and the first device is the spine switch.

9. A communication device comprising one or more circuits to:
determine a total number of active next-hops between the communication device and a first remote device of a plurality of remote devices;
determine a total number of next-hops between the communication device and the plurality of remote devices; and
reduce the total number of active next-hops between the communication device and the remote device based at least in part on the total number of next-hops between the communication device and the first remote device and the total number of next-hops between the communication device and the plurality of remote devices.

10. The communication device of claim 9, wherein the number of active next-hops between the communication device and the first remote device is reduced based further on a theoretical number of next-hops to reduce from the number of active next-hops between the communication device and the first remote device.

11. The communication device of claim 10, wherein the theoretical number of next-hops to reduce from the number of active next-hops between the communication device and the first remote device is determined based on weighting values converted from Border Gateway Protocol (BGP) data received by the communication device.

12. The communication device of claim 9, 10, or 11, wherein the next-hops between the communication device and the first remote device form a group of paths for network communication between the communication device and the first remote device.

13. The communication device of any of claims 9-12, wherein the communication device is further to reduce a number of active next-hops between the communication device and a second remote device based at least in part on a total number of next-hops between the communication device and the second remote device and the total number of active next-hops between the communication device and the plurality of remote devices.

14. The communication device of any of claims 9-13, wherein the communication device reduces the number of active next-hops between the communication device and the first remote device based at least in part on a difference between the total number of next-hops between the communication device and the first remote device and the total number of next-hops between the communication device and the plurality of remote devices.

15. A method, comprising:
determining a total number of active next-hops between a communication device and a first remote device of a plurality of remote devices;
determining a total number of active next-hops between the communication device and the plurality of remote devices; and
reducing the total number of active next-hops between the communication device and the first remote device based at least in part on the total number of next-hops between the communication device and the plurality of remote devices and the total number of active next-hops between the communication device and the first remote device.
